# EUROPÄISCHE PATENTANMELDUNG

(11) **EP 0 983 964 A2**
(43) Veröffentlichungstag der Anmeldung: **08.03.2000**
(21) Anmeldenummer: 99117267.7
(22) Anmeldetag: 02.09.1999
(51) Int. Cl.: C01B 3/38, B01J 8/06, B01J 8/00

(54) **Verfahren und Primärreformer zur Erzeugung von Synthesegas**

(30) Priorität: 04.09.1998 DE 19840403; 09.02.1999 DE 19905327
(71) Anmelder: Linde Aktiengesellschaft, 65189 Wiesbaden (DE)
(72) Erfinder: Hildebrandt, Ullrich, Dr.-Ing., 82049 Pullach (DE); Götz, Reiner, Dr.-Ing., 81477 München (DE); Kandziora, Bernd, Dipl.-Ing., 82065 Baierbrunn (DE)

(57) **Zusammenfassung**

Die Erfindung betrifft ein Verfahren und einen Primärreformer zur Erzeugung von Synthesegas aus einem Kohlenwasserstoff enthaltenden Gasgemisch und Wasserdampf und/oder Kohlendioxid, wobei ein Reaktionsgemisch aus dem Wasserdampf und/oder Kohlendioxid und dem Gasgemisch in einem Primärreformer innerhalb von bündelartig angeordneten, parallel durchströmten und Katalysatorpartikel enthaltenden Katalysatorrohren einer primären endothermen, katalytischen Reformierung unterworfen wird und stromab der Strom mit primär reformiertem Gas nach Zufuhr von Sauerstoff oder eines Sauerstoff enthaltenden Gases in mindestens einem Sekundärreformer einer Sekundärreformierung unterzogen wird, wobei heißes Synthesegas erzeugt und zur Deckung des Wärmebedarfs für die primäre Reformierung in einem indirekten Wärmeaustausch mit dem reagierenden Reaktionsgemisch in den Katalysatorrohren des Primärreformers geführt wird. Erfindungsgemäß wird das primär reformierte Gas aus den Katalysatorrohren (4) als Treibgas für mindestens eine Gasstrahlpumpe verwendet, wobei vom Treibgas ein kleiner Teil (5) heißen Synthesegases mitgerissen, mit dem Treibgas vermischt und das resultierende Gasgemisch aus dem primär reformierten Gas und dem kleinen Teil des heißen Synthesegases zum Sekundärreformer (10) geführt wird. Der Primärreformer (2) enthält gemäß Erfindung mindestens eine Gasstrahlpumpe, wobei jeweils zwei der zueinander benachbarten und beweglichen Teile des Primärreformers (2) als Treibdüse (15) und Mischrohr (6) ausgebildet sind und die Treibdüse (15) und das Mischrohr (6) zur Gasstrahlpumpe zusammengefügt sind.

## Beschreibung

Die Erfindung betrifft ein Verfahren und einen Primärreformer zur Erzeugung von Synthesegas aus einem Kohlenwasserstoff enthaltenden Gasgemisch und Wasserdampf und/oder Kohlendioxid, wobei ein Reaktionsgemisch aus dem Wasserdampf und/oder Kohlendioxid und dem Gasgemisch in einem Primärreformer innerhalb von bündelartig angeordneten, parallel durchströmten und Katalysatorpartikel enthaltenden Katalysatorrohren einer primären endothermen, katalytischen Reformierung unterworfen wird und stromab der Strom mit primär reformiertem Gas nach Zufuhr von Sauerstoff oder eines Sauerstoff enthaltenden Gases in mindestens einem Sekundärreformer einer Sekundärreformierung unterzogen wird, wobei heißes Synthesegas erzeugt wird und zur Deckung des Wärmebedarfs für die primäre Reformierung in einem indirekten Wärmeaustausch mit dem reagierenden Reaktionsgemisch in den Katalysatorrohren des Primärreformers geführt wird.

Die Erfindung betrifft außerdem einen Primärreformer für die Durchführung des erfindungsgemäßen Verfahrens mit parallel durchströmten, bündelartig in Rohrböden angeordneten und Katalysatorpartikel enthaltenden Katalysatorrohren, wobei die Katalysatorrohre eines Bündels in einem eintrittsseitigen Rohrboden fest und gasdicht und in mindestens einem anderen Rohrboden, oder in eingesetzten Teilen im anderen Rohrboden, axial beweglich angebracht sind oder zwar fest und gasdicht im anderen Rohrboden angebracht sind, wobei aber der Rohrboden Teil eines Sammlers ist und der Sammler über mindestens ein Austrittsrohr des Sammlers axial beweglich in je ein Mischrohr pro Austrittsrohr des Sammlers ragt.

In bekannten Verfahren wird heißes Synthesegas zur Deckung des Wärmebedarfs für die Reformierung möglichst gasdicht im Außenraum von Primärreformerrohren geführt (GB 2 244 494 A). Leckageströme von primär reformiertem Gas in das um den Druckabfall bei der Sekundärreformierung entspannte Synthesegas oder andere parallele Nebenströme werden vermieden. Dieses Verfahren erfordert aufwendige konstruktive Maßnahmen am Primärreformer: Um Wärmespannungen an den Rohren des Primärreformers zu vermeiden, werden die Rohre entweder mit gleitend beanspruchten Dichtungen (P. W. Farnell "ICI Katalco's Advanced Gas Heated Reformer", ICI Methanol Technology Operator's Forum, IMTOF (1997), San Diego) oder mit verformbaren Anschlußleitungen (FR 2 660 875) versehen, oder es werden Wärmeaustauscher mit Bajonettrohren (P. W. Farnell) verwendet.

Aufgabe der Erfindung ist es deshalb, ein einfaches Verfahren und einen konstruktiv einfachen Primärreformer für das Verfahren vorzuschlagen.

Diese Aufgabe wird erfindungsgemäß gelöst von einem Verfahren mit den Merkmalen des Anspruchs 1 und von einem Primärreformer mit den Merkmalen des Anspruchs 8. Ausführungen der Erfindung sind Gegenstand von Unteransprüchen.

Kennzeichnend an dem erfindungsgemäßen Verfahren ist, daß das primär reformierte Gas aus den mit Katalysatorrohren (4) als Treibgas für mindestens eine Gasstrahlpumpe verwendet wird, wobei vom Treibgas ein kleiner Teil (5) heißen Synthesegases mitgerissen, mit dem Treibgas vermischt und das resultierende Gasgemisch aus dem primär reformierten Gas und dem kleinen Teil des heißen Synthesegases zum Sekundärreformer (10) geführt wird. Die Gasstrahlpumpe(n) fördert (fördern) den kleinen Teil des heißen Synthesegases entgegen dem Druckabfall des Sekundärreformers in den Sekundärreformer zurück. Dadurch geht dieser kleine Teil des Synthesegases dem insgesamt erzeugten Synthesegas nicht verloren. Insbesondere wird jedoch ein unerwünschter Leckagestrom entgegen der Förderstromrichtung, der zu einer Erhöhung des Kohlenwasserstoffgehaltes im Synthesegas führen würde, vermieden.

Das primär refomierte Gas kann in als Treibdüsen verjüngten Enden der Katalysatorrohre zuerst beschleunigt, in Mischrohren mit dem kleinen Teil des heißen Synthesegases vermischt, dann gesammelt und zum Sekundärreformer geführt werden, es kann aber auch aus den Katalysatorrohren zuerst gesammelt und dann in mindestens einem Austrittsrohr des Sammlers beschleunigt, in je ein Mischrohr pro Austrittsrohr des Sammlers geleitet, mit jeweils einem kleinen Teil des heißen Synthesegases vermischt und zum Sekundärreformer geführt werden.

Das Reaktiongsgemisch kann mit Erdgas und Wasserdampf und/oder Kohlendioxid gebildet werden.

Das Reaktionsgemisch wird günstig bei einer Temperatur zwischen 400 und 600°C der primären Reformierung zugeführt.

Der Strom mit dem primär reformierten Gas wird am besten bei einer Temperatur zwischen 600 und 800°C der Sekundärreformierung zugeführt.

Das heiße Synthesegas wird mit Vorteil von einer Temperatur zwischen 900 und 1100°C zur Deckung des Wärmebedarfs für die primäre Reformierung auf eine Temperatur zwischen 500 und 700°C abgekühlt.

Kennzeichnend an dem erfindungsgemäßen Primärreformer (2) ist, daß der Primärreformer (2) mindestens eine Gasstrahlpumpe enthält, wobei jeweils zwei der zueinander benachbarten und beweglichen Teile des Primärreformers (2) als Treibdüse (15) und Mischrohr (6) ausgebildet sind und die Treibdüse (15) und das Mischrohr (6) zur Gasstrahlpumpe zusammengefügt sind. Ein solcher Primärreformer ist konstruktiv einfach und Wärmespannungen werden vollständig vermieden.

Mit Vorteil sind die Katalysatorrohre in einem gasaustrittsseitigen Rohrboden zu Treibdüsen verjüngt und in zu Mischrohren ausgebildeten Aussparungen des Rohrbodens (oder in in Aussparungen des Rohrbodens eingesetzten Mischrohren) axial beweglich und mit Spalten zwischen den Treibdüsen und den zu Mischrohren ausgebildeten Aussparungen des Rohrbodens (oder zwischen den Treibdüsen und den im Rohrboden eingesetzten Mischrohren) angeordnet. Alternativ kann jedes Austrittsrohr des Sammlers als Treibdüse ausgebildet und je Treibdüse ein zugehöriges Mischrohr vorgesehen sein, wobei Treibdüse und Mischrohr eine Gasstrahlpumpe bilden.

Die Katalysatorpartikel enthaltenden Rohre sind mit Vorteil als gerade Rohre ausgebildet.

Die geraden Rohre können senkrecht angeordnet und von oben nach unten durchströmt sein. So werden sie nicht auf Durchbiegung, sondern nur auf Zug belastet und können leicht mit Katalysatorpartikeln befüllt werden.

Die Spalte zwischen den Treibdüsen und den zu Mischrohren ausgebildeten Aussparungen des Rohrbodens oder zwischen den Treibdüsen und den im Rohrboden eingesetzten Mischrohren besitzen vorteilhafterweise eine Spaltbreite zwischen 0,2 und 1,0 mm. Die durch die Spalte geförderte Synthesegasmenge ist dann gering verglichen mit der erzeugten Synthesegasmenge. Dadurch bleibt der für den Sekundärreformer verfügbare Druckverlust nahezu erhalten.

Im Fall eines Sammlers mit mindestens einer nachgeschalteten Gasstrahlpumpe (wie oben beschrieben) besitzt der Spalt zwischen der Treibdüse und dem Mischrohr eine Spaltbreite zwischen 0,5 und 2,0 mm.

Die zu Mischrohren ausgebildeten Aussparungen des Rohrbodens oder die im Rohrboden eingesetzten Mischrohre können mit Vorteil mit von Strahlpumpen her bekannten Diffusoren ausgestattet sein. Mit eingesetzten Mischrohren kann der Rohrboden mit geringerer Dicke ausgeführt werden.

Im Falle eines Sammlers mit mindestens einer nachgeschalteten Gasstrahlpumpe (wie oben beschrieben) ist mit Vorteil das Mischrohr mit einem Diffusor ausgestattet.

Die Treibdüse(n) ragt (ragen) vorteilhaft bei Umgebungstemperatur in die Mischrohre hinein und halten bei Betriebstemperatur jeweils einen Abstand zwischen Austritt Mischrohr und Austritt Treibdüse von mindestens einem Achtfachen des Innendurchmessers des Mischrohrs ein.

Die Treibdüsen werden vorteilhaft mit einem Innendurchmesser zwischen 60 und 80 % des Innendurchmessers der Mischrohre ausgeführt.

Die Spalte können als Labyrinthdichtungen ausgebildet sein. Dadurch wird die durch die Spalte geförderte Synthesegasmenge reduziert.

Die Mischrohre können im Bereich der Spalte zu ihrem stromaufwärts liegenden Ende hin konisch erweitert sein. Dies erleichtert die Einführung der bündelartig angeordneten Treibdüsen in die Mischrohre.

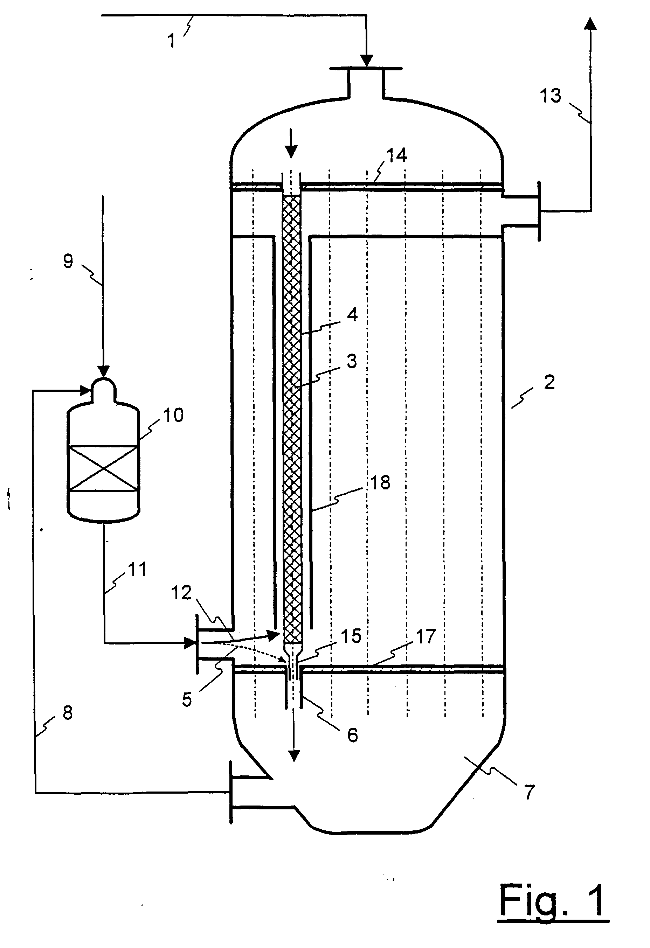

Die Erfindung wird anhand von Ausführungsformen mit fünf Figuren näher erläutert. Die Figuren 1 bis 5 zeigen schematisch Ausführungsformen des erfindungsgemäßen Verfahrens und des erfindungsgemäßen Primärreformers. Von mehreren Katalysatorrohren 4 des Primärreformers 2 ist jeweils nur ein Katalysatorrohr 4 explizit dargestellt, andere sind durch strichpunktierte Linien angedeutet.

Die Figuren 1 bis 3 zeigen Ausführungsformen mit mehreren Gasstrahlpumpen 6, 15.
- Figur 1: zeigt eine Ausführungsform mit Mischrohren 6 in einem Rohrboden 17.
- Figur 2: zeigt eine Ausführungsform wie in Figur 1, aber der Rohrboden ist Teil eines Sammlers 7'.
- Figur 3: zeigt eine Ausführungsform wie in Figur 2, aber mit anderer Austrittsstelle des Gemisches 8 mit dem primärreforrmierten Gas aus dem Primärreformer 2.

Die Figuren 4 und 5 zeigen Ausführungsformen mit einer einzigen Gasstrahlpumpe 6, 15 und gasdicht mit dem Rohrboden 17 verbundenen Katalysatorrohren 4.

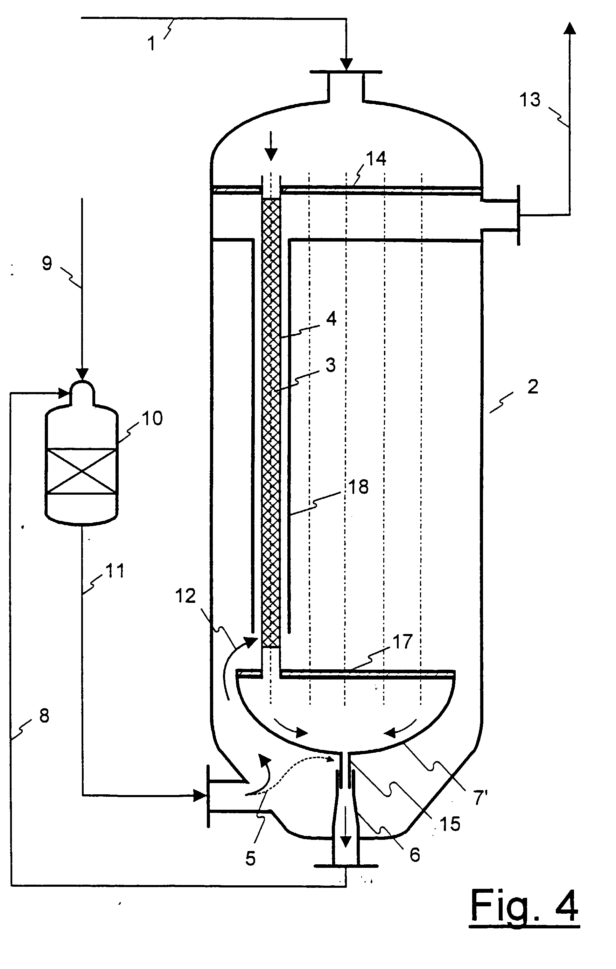

- Figur 4: zeigt eine Ausführungsform mit einem Austrittsrohr des Primärreformers 2 als Mischrohr 6.

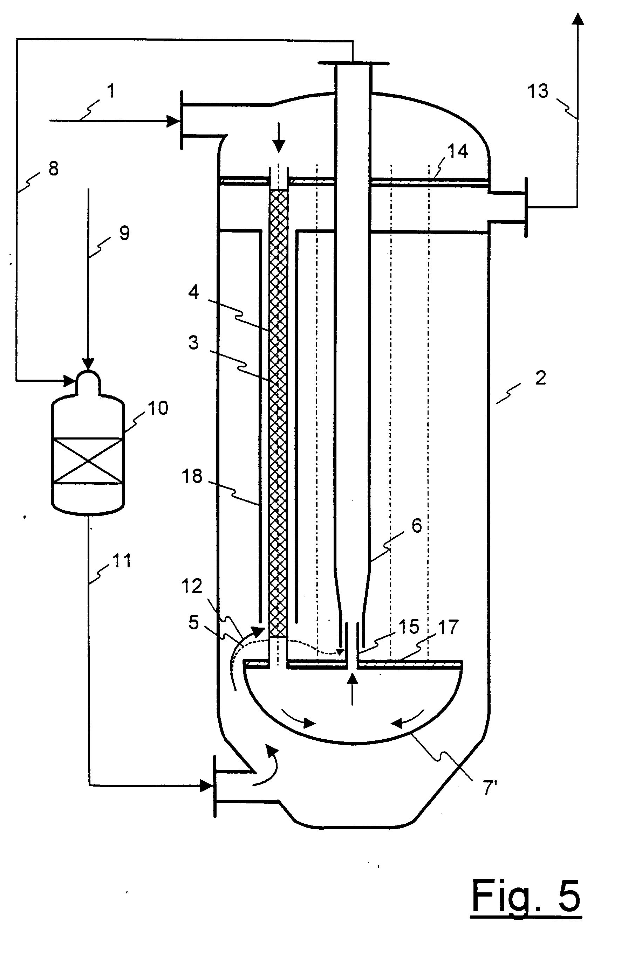

- Figur 5: zeigt eine Ausführungsform wie in Figur 4 aber mit anderer Austrittsstelle des Gemisches 8 mit dem primär reformierten Gas aus dem Primärreformer 2.

### Figur 1

Ein Reaktionsgemisch 1 mit Erdgas und Wasserdampf und/oder Kohlendioxid wird bei einer Temperatur von 450°C einer primären endothermen katalytischen Reformierung in einem Primärreformer 2 unterworfen. Das Reaktionsgemisch wird in parallelen Gasströmen durch mit Katalysatorpartikeln 3 gefüllte Rohre 4 geleitet. Primär reformiertes Gas mit einer Temperatur von etwa 650°C aus den Katalysatorrohren 4 saugt als Treibgas einen kleinen Teil 5 des etwa 950°C heißen Synthesegases 11 aus dem Außenraum der Katalysatorrohre in Mischrohre 6 und fördert ihn in einen Sammelraum 7. Das Gemisch 8 aus dem primär refomierten Gas und dem kleinen Teil 5 des heißen Synthesegases wird nach Zufuhr eines Sauerstoff enthaltenden Gases 9 in einem Sekundärreformer 10 einer Sekundärreformierung unterzogen. Dabei entsteht das etwa 950°C heiße Synthesegas 11, das zum überwiegenden Teil 12 im Wärmekontakt mit den Rohren 4 des Primärreformers 2 geführt wird, sich dabei auf etwa 530°C abkühlt und als Strom 13 einer Verwendung zugeführt wird.

Der Primärreformer 2 ist als stehender zylindrischer Behälter ausgeführt mit an einem oberen Rohrboden 14 senkrecht hängend befestigten mit Katalysatorpartikeln 3 gefüllten Katalysatorrohren 4. Die Katalysatorrohre 4, von denen eines in der Figur 1 dargestellt ist, sind am unteren Ende zu einer Treibdüse 15 verjüngt und ragen konzentrisch so in die Mischrohre 6 hinein, daß Ringspalte von etwa 0,2 bis 1 mm Breite frei bleiben. Die Mischrohre 6 sind in einem unteren Rohrboden 17 eingelassen. Die Treibdüsen 15 bilden mit den Mischrohren 6 zusammen Gasstrahlpumpen. Um die mit Katalysatorpartikeln 3 befüllten Rohre 4 sind mit ringförmigem Abstand Hüllrohre 18 konzentrisch angeordnet, die das zur Heizung der Rohre bestimmte Synthesegas führen.

### Figur 2

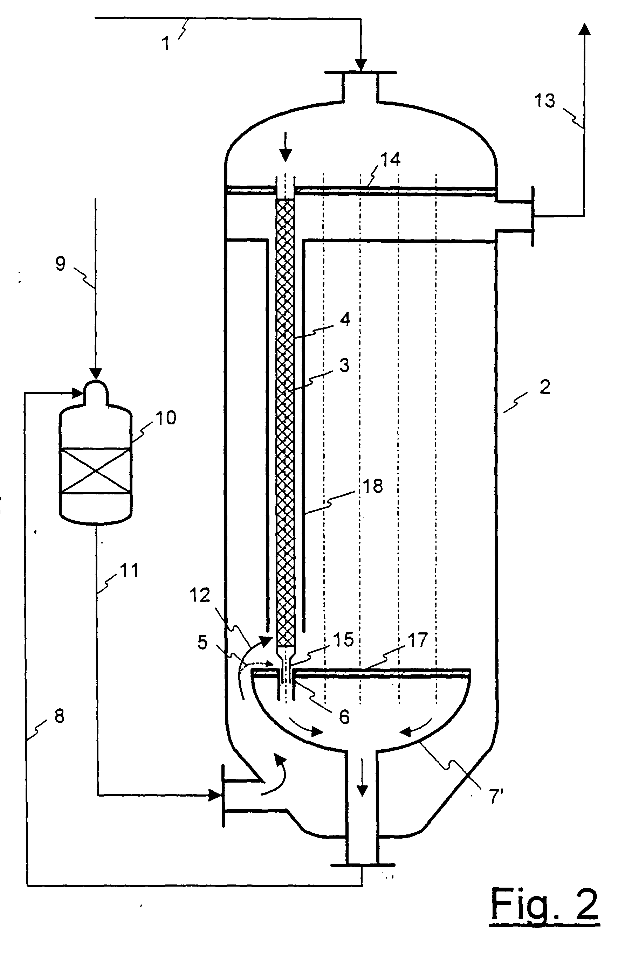

Der erfindungsgemäße Primärreformer 2 nach Figur 2 ist bis auf einen als Teil eines Sammlers 7' gestalteten Rohrboden 17 aufgebaut wie in der Figur 1.

### Figur 3

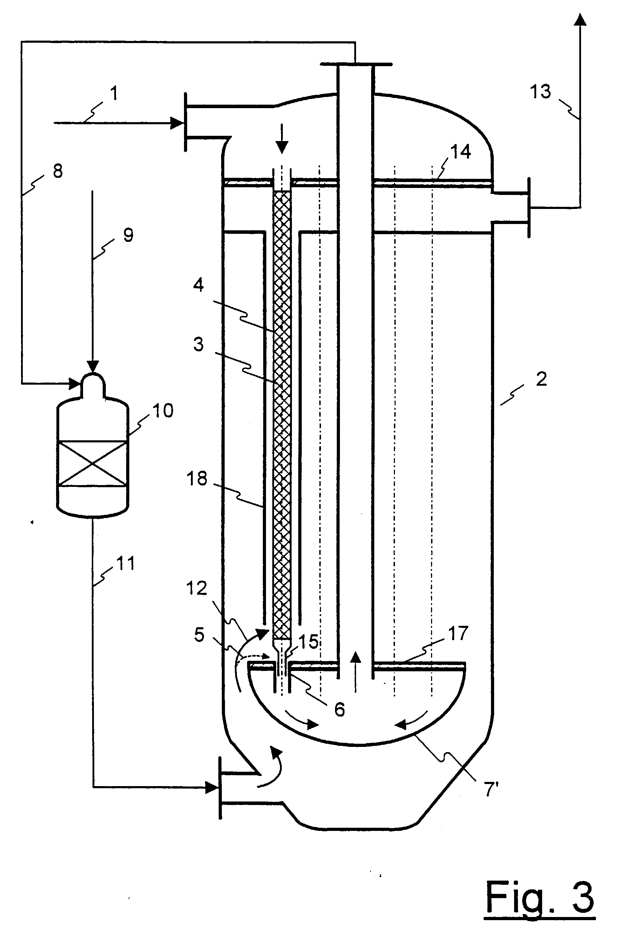

Anders als in Figur 2 wird in der Ausführungsform der Erfindung nach Figur 3 die Strömungsrichtung des Gemisches aus dem primär reformierten Gas und dem kleinen Teil 5 des heißen Synthesegases im Sammler 7' des Primärreformers 2 um 180°C gedreht, bevor das Gemisch den Primärreformer 2 verläßt und als Strom 8 dem Sekundärreformer 10 zugeführt wird.

### Figur 4

In der Ausführungsform der Erfindung nach Figur 4 wird anders als in Figur 1 bis 3 das primärreformierte Gas aus den Katalysatorrohren 4 erst gesammelt, dann in einem Austrittsrohr 15 des Sammlers 7' beschleunigt, in ein Mischrohr 6 geleitet, mit dem kleinen Teil 5 des heißen Synthesegases 11 vermischt und als Strom 8 zum Sekundärreformer 10 geführt. Beim Primärreformer 2 ist das Austrittsrohr des Sammlers 7' als Treibdüse 15 und das Austrittsrohr des Primärreformers 2 als Mischrohr 6 ausgebildet, und die Treibdüse 15 und das Mischrohr 6 sind zu einer einzigen Gasstrahlpumpe 6, 15 zusammengefügt.

### Figur 5

Anders als in Figur 4 wird in der Ausführungsform der Erfindung nach Figur 5 die Strömungsrichtung des primär reformierten Gases aus den Katalysatorrohren 4 im Sammler 7' des Primärreformers 2 um 180°C gedreht, bevor das primär reformierte Gas aus den Katalysatorrohren 4 im Austrittsrohr 15 des Sammlers 7' beschleunigt, in das Mischrohr 6 geleitet, mit dem kleinen Teil 5 des heißen Synthesegases 11 vermischt und als Strom 8 zum Sekundärreformer 10 geführt wird.

## Patentansprüche

1. Verfahren zur Erzeugung von Synthesegas aus einem Kohlenwasserstoff enthaltenden Gasgemisch und Wasserdampf und/oder Kohlendioxid, wobei ein Reaktionsgemisch aus dem Wasserdampf und/oder Kohlendioxid und dem Gasgemisch in einem Primärreformer innerhalb von bündelartig angeordneten, parallel durchströmten und Katalysatorpartikel enthaltenden Katalysatorrohren einer primären endothermen, katalytischen Reformierung unterworfen wird und stromab der Strom mit primär reformiertem Gas nach Zufuhr von Sauerstoff oder eines Sauerstoff enthaltenden Gases in mindestens einem Sekundärreformer einer Sekundärreformierung unterzogen wird, wobei heißes Synthesegas erzeugt wird und zur Deckung des Wärmebedarfs für die primäre Reformierung in einem indirekten Wärmeaustausch mit dem reagierenden Reaktionsgemisch in den Katalysatorrohren des Primärreformers geführt wird, **dadurch gekennzeichnet**, daß das primär reformierte Gas aus den Katalysatorrohren als Treibgas für mindestens eine Gasstrahlpumpe verwendet wird, wobei vom Treibgas ein kleiner Teil heißen Synthesegases mitgerissen, mit dem Treibgas vermischt und das resultierende Gasgemisch aus dem primär reformierten Gas und dem kleinen Teil des heißen Synthesegases zum Sekundärreformer geführt wird.

2. Verfahren nach Anspruch 1, dadurch gekennzeichnet, daß das primär reformierte Gas in als Treibdüsen verjüngten Enden der Katalysatorrohre zuerst beschleunigt, in Mischrohren mit dem kleinen Teil des heißen Synthesegases vermischt, dann gesammelt und zum Sekundärreformer geführt wird.

3. Verfahren nach Anspruch 1, dadurch gekennzeichnet, daß das primär reformierte Gas aus den Katalysatorrohren zuerst gesammelt und dann in mindestens einem Austrittsrohr des Sammlers beschleunigt, in je ein Mischrohr pro Austrittsrohr des Sammlers geleitet, mit jeweils einem kleinen Teil des heißen Synthesegases vermischt und zum Sekundärreformer geführt wird.

4. Verfahren nach einem der Ansprüche 1 bis 3, dadurch gekennzeichnet, daß das Reaktionsgemisch mit Erdgas und Wasserdampf und/oder Kohlendioxid gebildet wird.

5. Verfahren nach einem der Ansprüche 1 bis 4, dadurch gekennzeichnet, daß das Reaktionsgemisch bei einer Temperatur zwischen 400 und 600°C der primären Reformierung zugeführt wird.

6. Verfahren nach einem der Ansprüche 1 bis 5, dadurch gekennzeichnet, daß der Strom mit dem primär reformierten Gas bei einer Temperatur zwischen 600 und 800°C der Sekundärreformierung zugeführt wird.

7. Verfahren nach einem der Ansprüche 1 bis 6, dadurch gekennzeichnet, daß das heiße Synthesegas von einer Temperatur zwischen 900 und 1100°C zur Deckung des Wärmebedarfs für die primäre Reformierung auf eine Temperatur zwischen 500 und 700°C abgekühlt wird.

8. Primärreformer für die Durchführung des Verfahrens nach einem der Ansprüche 1 bis 7 mit parallel durchströmten, bündelartig in Rohrböden angeordneten und Katalysatorpartikel enthaltenden Katalysatorrohren, wobei die Katalysatorrohre eines Bündels im eintrittsseitigen Rohrboden fest und gasdicht und in mindestens einem anderen Rohrboden, oder in eingesetzten Teilen im anderen Rohrboden, axial beweglich angebracht sind oder zwar fest und gasdicht im anderen Rohrboden angebracht sind, wobei aber der Rohrboden Teil eines Sammlers ist und der Sammler über mindestens ein Austrittsrohr des Sammlers axial beweglich in je ein Mischrohr pro Austrittsrohr des Sammlers ragt, dadurch gekennzeichnet, daß der Primärreformer mindestens eine Gasstrahlpumpe enthält, wobei jeweils zwei der zueinander benachbarten und beweglichen Teile des Primärreformers als Treibdüse und Mischrohr ausgebildet sind und die Treibdüse und das Mischrohr zur Gasstrahlpumpe zusammengefügt sind.

9. Primärreformer nach Anspruch 8, dadurch gekennzeichnet, daß die Katalysatorrohre in einem gasaustrittsseitigen Rohrboden zu Treibdüsen verjüngt sind und in zu Mischrohren ausgebildeten Aussparungen des Rohrbodens, oder in in Aussparungen des Rohrbodens eingesetzten Mischrohren, axial beweglich und mit Spalten zwischen den Treibdüsen und den zu Mischrohren ausgebildeten Aussparungen des Rohrbodens, oder zwischen den Treibdüsen und den im Rohrboden eingesetzten Mischrohren angeordnet sind.

10. Primärreformer nach Anspruch 8, dadurch gekennzeichnet, daß jedes Austrittsrohr des Sammlers als Treibdüse ausgebildet und je Treibdüse ein zugehöriges Mischrohr vorgesehen ist, wobei Treibdüse und Mischrohr zusammen je eine Gasstrahlpumpe bilden.

11. Primärreformer nach Anspruch 8 bis 10, dadurch gekennzeichnet, daß die Katalysatorrohre als gerade Rohre ausgebildet sind.

12. Primärreformer nach Anspruch 11, dadurch gekennzeichnet, daß die geraden Rohre senkrecht angeordnet und von oben nach unten durchströmt sind.

13. Primärreformer nach Anspruch 9, dadurch gekennzeichnet, daß die Spalte zwischen den Treibdüsen und den zu Mischrohren ausgebildeten Aussparungen des Rohrbodens oder den im Rohrboden eingesetzten Mischrohren eine Spaltbreite zwischen 0,2 und 1,0 mm besitzen.

14. Primärreformer nach Anspruch 10, dadurch gekennzeichnet, daß der Spalt zwischen der Treibdüse und dem Mischrohr eine Spaltbreite zwischen 0,5 und 2,0 mm besitzt.

15. Primärreformer nach Anspruch 9, dadurch gekennzeichnet, daß die zu Mischrohren ausgebildeten Aussparungen des Rohrbodens, oder die im Rohrboden eingesetzten Mischrohre mit Diffusoren ausgestattet sind.

16. Primärreformer nach Anspruch 10, dadurch gekennzeichnet, daß jedes Mischrohr mit einem Diffusor ausgestattet ist.

17. Primärreformer nach einem der Ansprüche 8 bis 16, dadurch gekennzeichnet, daß die Treibdüse(n) bei Umgebungstemperatur in das (die) Mischrohr(e) hineinragt (hineinragen) und daß bei Betriebstemperatur jeweils ein Abstand zwischen Austritt Mischrohr und Austritt Treibdüse von mindestens einem Achtfachen des Innendurchmessers des Mischrohrs eingehalten wird.

18. Primärreformer nach einem der Ansprüche 8 bis 17, dadurch gekennzeichnet, daß die Treibdüsen mit einem Innendurchmesser zwischen 60 und 80 % des Innendurchmessers der Mischrohre ausgeführt sind.

19. Primärreformer nach einem der Ansprüche 9 bis 18, dadurch gekennzeichnet, daß die Spalte als Labyrinthdichtungen ausgebildete sind.

20. Primärreformer nach einem der Ansprüche 8 bis 19, dadurch gekennzeichnet, daß die Mischrohre im Bereich der Spalte zu ihrem stromaufwärts liegenden Ende hin konisch erweitert sind.
